# EUROPEAN PATENT SPECIFICATION

(11) **EP 4 115 257 B1**
(45) Date of publication and mention of the grant of the patent: **21.02.2024**
(21) Application number: 21708738.6
(22) Date of filing: 01.03.2021
(51) Int. Cl.: G05D 1/12, B64C 39/02, G01S 17/00, B64U 101/00

(54) **DRONE INTERCEPTION**
ABFANGEN VON DROHNEN
INTERCEPTION DE DRONES

(30) Priority: 06.03.2020 GB 202003298; 06.03.2020 EP 20275054
(43) Date of publication of application: 11.01.2023
(73) Proprietor: BAE SYSTEMS plc, London SW1Y 5AD (GB)
(72) Inventor: SALTER, Robert John, Christchurch Dorset BH23 4JE (GB)
(74) Representative: BAE SYSTEMS plc Group IP Department
(86) International application number: PCT/GB2021/050512
(87) International publication number: WO 2021/176202

(56) References cited:
- DE-A1-102015 008 255
- US-A1- 2018 364 741
- Lutgert: "Nederland en de Duitse Nachtjacht", , 31 December 1994 (1994-12-31), XP055721755, Retrieved from the Internet: URL:https://www.nonstopsystems.com/radio/p df-hell/article-mil-spct-94-12.pdf [retrieved on 2020-08-11]

## Description

### FIELD

The present disclosure relates to system for intercepting a rogue drone. The present disclosure also relates to an air vehicle and a method for intercepting a rogue drone.

### BACKGROUND

A number of techniques are known for intercepting rogue unmanned aerial vehicles (UAVs), or "drones", such as grapples and nets fired either from the ground or other UAVs. However, where an interceptor UAV is used to intercept a rogue drone, it can be challenging to locate the rogue drone, particularly as drones tend to be relatively small and fast-moving.

Therefore, there is a need to provide an improved method of intercepting drones that addresses at least this problem.

Lutgert: "Nederland en de Duitse Nachtjacht", 31 December 1994, relates to locating aircraft using reflected electromagnetic radiation as they fly through an illuminated region.

DE 10 2015 008255A1 relates to a drone for defending a region against another drone.

US2018/364741A1 relates to tracking a target drone based on human detection and selection.

### SUMMARY

According to a first aspect of the present disclosure, there is provided a system for intercepting a rogue drone, the system comprising:
a broad-angle electromagnetic radiation emitter for illuminating a cone of sky with coded electromagnetic radiation; and
an air vehicle, comprising:
   an electromagnetic radiation detector for receiving coded electromagnetic radiation reflected from a rogue drone operating in the cone of sky; and
   a controller for determining the position of the rogue drone based on the received coded electromagnetic radiation,
**characterised by:**
the detector comprising a notch filter for selecting the coded electromagnetic radiation and for disregarding light from other sources.

Advantageously, the system reduces the burden on a human operator of an air vehicle, being used as an interceptor drone, and enables a rogue drone to be more quickly intercepted.

The emitter may comprise a coded laser beam emitter. The emitter may comprise a monochromatic coded laser beam emitter. The laser beam may have a wavelength of between 700nm and 1 mm.

The system may comprise a rotatable mount coupled to the emitter, and the mount may be arranged to provide the emitter with adjustable rotation and elevation. The mount may comprise a motor and a controller, wherein the controller is configured to generate control signals to control the motor to change the elevation and/or pointing direction of the emitter.

According to a second aspect of the present disclosure, there is provided an air vehicle for intercepting a rogue drone, comprising:
a detector for receiving coded electromagnetic radiation reflected from a rogue drone; and
a controller configured to calculate the azimuth and elevation of the rogue drone using the received coded electromagnetic radiation,
**characterised by:**
the detector comprising a notch filter for selecting the coded electromagnetic radiation and for disregarding light from other sources.

The detector may comprise a plurality of cameras. The coded electromagnetic radiation may comprise coded laser illumination. The notch filter may comprise an optical notch filter.

The controller may be configured to generate control signals to cause the air vehicle to move toward the rogue drone.

The air vehicle may comprise a drone neutralisation device. The drone neutralisation device may comprise a plurality of deployed cords coupled at one end to the bottom of the air vehicle.

According to a third aspect of the present invention, there is provided a method of intercepting a rogue drone, comprising:
illuminating a cone of sky with coded electromagnetic radiation;
receiving coded electromagnetic radiation reflected from a rogue drone operating in the cone of sky; and
determining the position of the rogue drone using the received coded electromagnetic radiation,
**characterised by:**
filtering received coded electromagnetic radiation such that a predetermined frequency of electromagnetic radiation can be received and processed to determine the position of the rogue drone.

The method may comprise generating control signals to move an air vehicle toward the rogue drone.

The method may comprise neutralising the rogue drone.

It will be appreciated that features described in relation to one aspect of the present disclosure can be incorporated into other aspects of the present disclosure. For example, an apparatus of the disclosure can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

### BRIEF DESCRIPTION OF THE DRAWINGS

Embodiments of the disclosure will now be described by way of example only and with reference to the accompanying drawings.
Figure 1 is a schematic illustration of a drone interception arrangement according to an embodiment;
Figure 2 is a system diagram of an unmanned aircraft for use in the drone interception arrangement shown in Figure 1; and
Figure 3 is a flowchart showing a method of intercepting a drone according to an embodiment.

For convenience and economy, the same reference numerals are used in different figures to label identical or similar elements.

### DETAILED DESCRIPTION

Generally, embodiments herein relate to a drone interception system, including an unmanned aircraft. There are a number of ways in which a rogue drone can be intercepted (in other words, disabled or neutralised), such as by intentionally crashing an unmanned aircraft into the rogue drone, capturing the rogue drone in a net fired by, or dangling from, the unmanned aircraft, an electromagnetic pulse, or tangling propellers of the drone in cords extending from the unmanned aircraft. However, it can be challenging to locate a drone if it is not under the control of the party wishing to locate it. While other embodiments are also disclosed herein, one embodiment of this disclosure relates to illuminating the rogue drone with a broad-angle coded laser beam from a ground station, measuring the reflection of that beam at an unmanned aircraft, and moving the unmanned aircraft toward the rogue drone using the coded reflections so that the drone can be intercepted.

The word "drone" is used throughout this specification to refer to a small (for example 25kg or less) unmanned aircraft, typically fitted with a camera system and controlled by a human operator on the ground. Drones may take the form of aeroplanes or helicopters, with "quadcopter" designs being particularly common. To increase endurance and reduce cost, drones are typically propeller-driven. It is possible for such drones to be fitted with improvised explosive devices, but their presence alone can be the cause of significant danger or security risk when flown by unauthorised persons in the vicinity of infrastructure such as airports or train tracks, or military or government facilities. The air vehicle used for intercepting rogue drones (i.e. drones which are trespassing on, interfering with or threatening a user or area) described herein below may itself be a drone, manned aircraft, unmanned aircraft, missile or projectile.

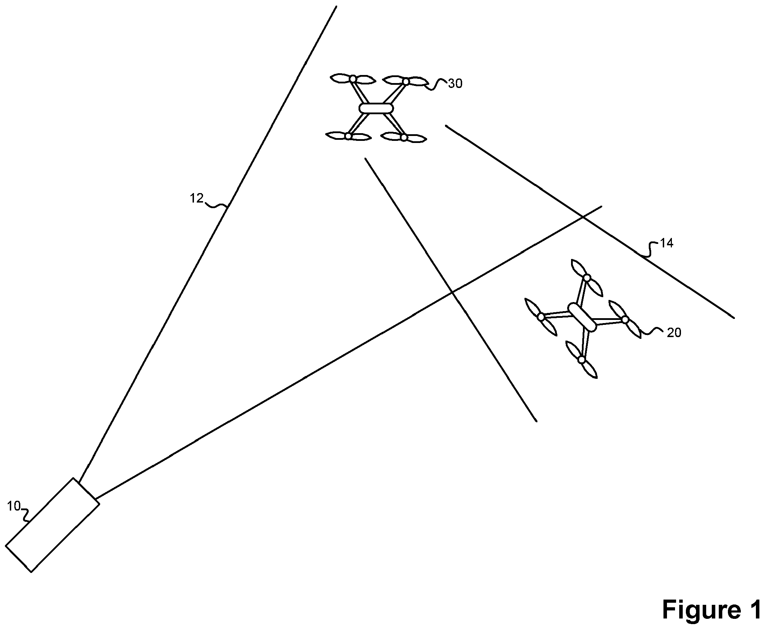

A rogue drone 30 interception arrangement will now be described with reference to Figure 1. Here, an electromagnetic (EM) radiation 12 emitter 10 is used to illuminate an area of the sky. The emitter 10 preferably emits EM radiation 12 in a broad angle to maximise the chance of the beam hitting a rogue drone 30. A spot-beam laser, as found in laser targeting pods for air-launched precision weapons, tends to be very difficult to deploy against a small fast-moving vehicle such as a drone 30 as the beam needs to be held on the vehicle for a long period of time to be effective in guiding an interceptor towards it. The use of a broad-angle laser emitter 10 tends to make it easier for an operator to illuminate the rogue drone 30 as approximate aiming can be utilised with the system remaining effectual. The dispersion angle of the beam may typically be around a solid angle of 30 degrees.

Preferably, the emitter 10 is a laser light emitter. The emitter 10 emits EM radiation 12 having a single frequency, for example, the emitter 10 may be an ultraviolet laser or an infrared laser. By way of example only, the emitter may be an ultraviolet laser having a wavelength of between about 10 nm and 400 nm, or an infrared laser having a wavelength of between about 700 nm and 1 mm. Infrared laser light, for example, can be projected relatively far yet not be distracting to vehicle operators (e.g. pilots of commercial airliners operating in the vicinity of the rogue drone 30). The emitter 10 may alternatively be a laser operating in the visible spectrum, such as with a wavelength of 531 nm. Here, the laser light may be reduced in intensity such that it is not harmful or distracting to vehicle operators. Therefore, laser light tends to be useful for detecting rogue drones 30 in urban environments or where other vehicles are operating. The emitter 10 may generate coded laser light, so that a detector is better able to quickly and correctly target the illuminated drone 30 without complex image processing, rather than be drawn to a reflection from another laser source.

Coded in the present context means the laser light 12 is emitted in a predetermined series of on/off pulses in a pattern that has been previously shared between the emitter 10 and the interceptor drone 20, such that they can be recognised by the interceptor drone 20.

The emitter 10 is arranged on a rotary platform with a pivotable mount, such that the emitter 10 can rotate and elevate to point in the approximate direction of a rogue drone 30. The emitter 10 may be mounted on a gimbal. The mount may be driven by a motor. The motor may be controlled by a controller. Alternatively, the emitter 10 may be aimed by a human operator.

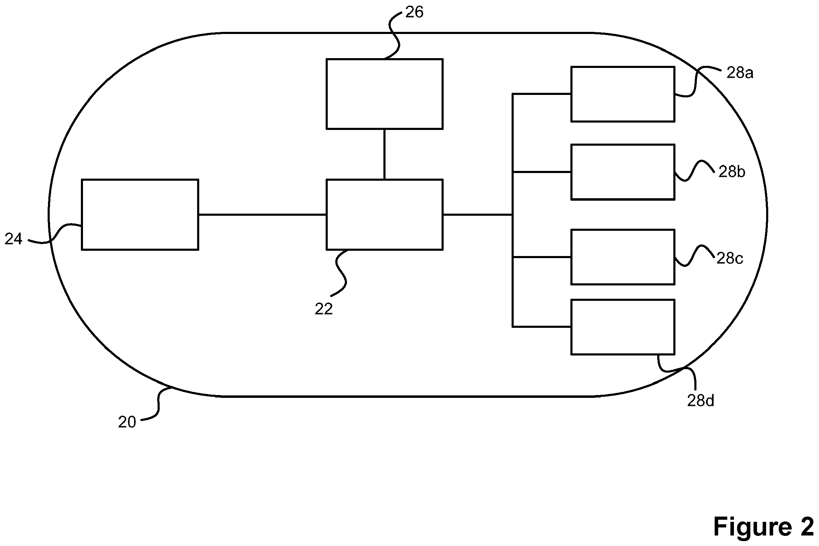

The arrangement further includes an interceptor drone 20 for intercepting the rogue drone 30. The interceptor drone 20 will be described in more detail with reference to Figure 2. In some embodiments, the interceptor drone 20 detects the EM radiation 14 that is reflected off the rogue drone 30 as the emitter 10 scans the sky. While EM emitters 10 and receivers, such as radars, are typically installed on aircraft, the interceptor drone 20 in the described arrangement is typically too lightweight to be able to carry such a device.

The intensity of the reflected EM radiation 14 is used by the interceptor drone 20 to determine the direction to and elevation of the rogue drone 30.

The interceptor drone 20 includes an electromagnetic radiation detector 24, such as a laser light receiver. In some embodiments, the detector 24 comprises a plurality of cameras pointing in all directions around the interceptor drone 20. Alternatively, the detector 24 may comprise a single camera. The detector 24 comprises a notch filter for selecting the coded laser light and disregarding light from other sources. The notch filter may be an optical notch filter. The notch filter matches the coded laser illumination.

The detector 24 is in communication with a controller 22. The controller 22 may take any suitable form. For instance, it may be a microcontroller, plural microcontrollers, a processor, or plural processors. The controller 22 is arranged to determine the direction to a rogue drone 30 off which EM radiation 14 is being reflected. In some embodiments, this is achieved by using directional optical sensors or a digital camera to determine the direction to the rogue drone 30.

The controller 22 is arranged in communication with the interceptor drone's flight control surfaces 28a-d. The interceptor drone 20 depicted in Figures 1 and 2 is a quadcopter-type aircraft, with four propulsion units 28a-c that can be adjusted to control pitch, heading and lift of the interceptor drone 20. In other embodiments, the interceptor drone 20 may take a different form, such as that of a traditional aeroplane, helicopter, airship or balloon. Therefore, in other embodiments, there may be less than or more than four flight control surfaces 28a-d. Flight control surfaces 28a-d can include rotors, elevators, ailerons, flaps, propellers and engines. The controller 22 is arranged to generate control signals to control the control surfaces 28a-d to change the direction of flight and/or altitude and/or attitude and/or velocity of the interceptor drone 20 to move it toward the rogue drone 30.

In other embodiments, instead of automatically controlling the control surfaces 28a-d to move the interceptor drone 20 towards the rogue drone 30, the interceptor drone 20 is controlled to move by a human operator. The human operator may receive an indicator of heading to and altitude of the rogue drone 30 through a computer terminal or handheld electronic device. The heading and altitude of the rogue drone 30 may be calculated by the controller 22 on the interceptor drone 20. Alternatively, the heading and altitude may be calculated by the computer terminal in the control station or on the handheld device. The indicator may be an audible tone that sounds when the interceptor drone 20 is pointing towards the rogue drone 30, for example. Alternatively, the indicator may be arrows displayed on the screen of a device, such as a computer monitor. Alternatively again, the indicator may comprise a set of written instructions.

In some embodiments, the controller 22 is further coupled to a drone neutralisation mechanism 26. The neutralisation mechanism 26 may be, for example, a launchable net or a harpoon. In other embodiments, the neutralisation mechanism 26 is passive and not coupled to the controller 22. Here, the neutralisation mechanism 26 may include dangling cords, for example. In embodiments where the neutralisation mechanism 26 is electrically coupled to the controller 22, the controller 22 is arranged to activate the neutralisation mechanism 26 when the interceptor drone 20 is within a threshold distance from the rogue drone 30. In another embodiment, the neutralisation mechanism could be physical contact (collision) between the interceptor drone 20 and the rogue drone 30.

In other embodiments, the interceptor drone 20 is in communication with a control station, which is in communication with a ground-based EM radiation detector. The ground-based detector receives the reflected EM radiation 14 from the rogue drone 30. The control station is arranged to calculate the range to the rogue drone 30 by measuring the time taken for the radiation to be reflected back to the detector. The altitude of the rogue drone 30 is determined using the distance to the rogue drone 30 and the angle of elevation of the emitter 10 when reflected EM radiation 14 is detected.

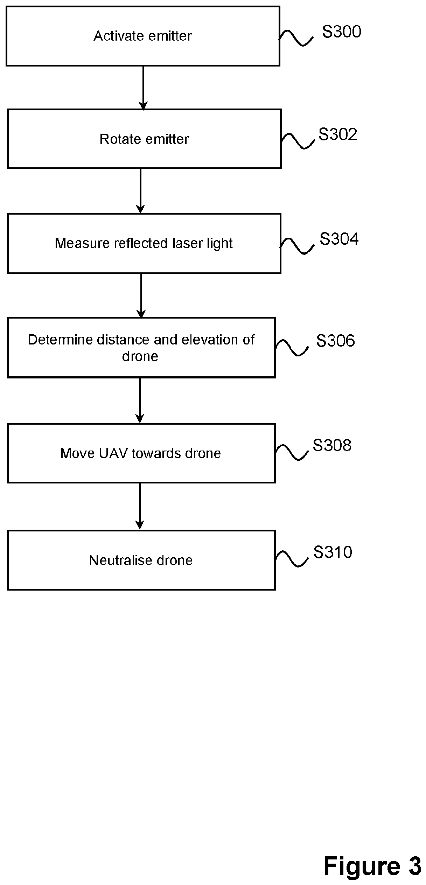

A method of intercepting a rogue drone 30 will now be described with reference to Figure 3. In a first step S300, the emitter 10 is activated in order to illuminate an area of sky with coded electromagnetic radiation 12. In one embodiment, the emitter 10 is a broad-angle coded laser beam emitter. In step S302, the emitter 10 is rotated and/or elevated such that a different part of the sky is illuminated. A platform on which the emitter 10 is mounted may be programmed to repeat this step such that sky within line of sight of the emitter 10 is illuminated for a threshold amount of time during a predetermined time period (for example, a cone of sky may be illuminated for 5 seconds during every minute). Step S302 may not be performed in embodiments where the sky above an area requiring protection from drones 30 (e.g. a runway) can be illuminated without adjusting the position of the emitter 10. In some embodiments, direction and elevation of the emitter 10 is manually controlled, such that the rogue drone 30 can be tracked. When a rogue drone 30 has been detected by having coded electromagnetic radiation 12 reflected off it and received by a receiver, the emitter platform may be continually adjusted such that the emitter 10 remains pointed in the direction of the rogue drone 30.

In step S304, the EM radiation 14 reflected off the rogue drone 30 is detected by the interceptor drone 20. The controller 22 in the interceptor drone 20 is then used, in step S306, to determine the azimuth and elevation of the rogue drone 30 relative to the interceptor drone 20. In some embodiments, the altitude of the rogue drone 30 above the ground is determined.

In step S308, the controller 22 generates control signals and transmits them to the control surfaces 28a-d such that the interceptor drone 20 moves towards the rogue drone 30. Steps S304 and S306 may be repeated continuously while step S308 is being performed, such that the position of the rogue drone 30 relative to the interceptor drone 20 is updated in near real-time.

In step S310, the rogue drone 30 is neutralised by the interceptor drone 20. This may comprise flying the interceptor drone 20 such that it collides with the rogue drone 30. In other embodiments, neutralising the rogue drone 30 may comprise catching the rogue drone 30 in devices extending from the interceptor drone 20. Neutralising the rogue drone 30 can include a range of techniques that would be readily considered by the skilled person.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

## Claims

1. A system for intercepting a rogue drone (30), the system comprising:
a broad-angle electromagnetic radiation emitter (10) for illuminating a cone of sky with coded electromagnetic radiation (12); and
an air vehicle (20), comprising:
an electromagnetic radiation detector (24) for receiving coded electromagnetic radiation (14) reflected from a rogue drone operating in the cone of sky; and
a controller (22) for determining the position of the rogue drone based on the received coded electromagnetic radiation,
**characterised by:**
the detector comprising a notch filter for selecting the coded electromagnetic radiation and for disregarding light from other sources.

2. The system according to claim 1, wherein the emitter comprises a coded laser beam emitter.

3. The system according to claim 2, wherein the emitter comprises a monochromatic code laser beam emitter.

4. The system according to claim 2 or claim 3, wherein the laser beam has a wavelength of between 700nm and 1mm.

5. The system according to any one of the preceding claims, comprising a rotatable mount coupled to the emitter, wherein the mount is arranged to provide the emitter with adjustable rotation and elevation.

6. The system according to claim 5, wherein the mount comprises a motor and a controller, the controller being configured to generate control signals to control the motor to change the elevation and/or pointing direction of the emitter.

7. An air vehicle (20) for intercepting a rogue drone, comprising:
a detector (24) for receiving coded electromagnetic radiation (14) reflected from a rogue drone (30); and
a controller (22) configured to calculate the azimuth and elevation of the rogue drone using the received coded electromagnetic radiation,
**characterised by:**
the detector comprising a notch filter for selecting the coded electromagnetic radiation and for disregarding light from other sources.

8. The air vehicle according to claim 7, wherein the detector comprises a plurality of cameras.

9. The air vehicle according to claim 7 or claim 8, wherein the controller is configured to generate control signals to cause the air vehicle to move toward the rogue drone.

10. The air vehicle according to any one of claims 7 to 9, comprising a drone neutralisation device (24).

11. The air vehicle according to claim 10, wherein the drone neutralisation device comprises a plurality of deployed cords coupled at one end to the bottom of the air vehicle.

12. A method of intercepting a rogue drone (30), comprising:
illuminating a cone of sky with coded electromagnetic radiation (12);
receiving coded electromagnetic radiation (14) reflected from a rogue drone (30) operating in the cone of sky; and
determining the position of the rogue drone using the receiving coded electromagnetic radiation,
**characterised by:**
filtering the received coded electromagnetic radiation using a notch filter, such that a predetermined frequency of electromagnetic radiation is received and processed.

13. The method of intercepting a rogue drone according to claim 12, comprising generating control signals to move an air vehicle toward the rogue drone.

14. The method according to claim 12 or claim 13, comprising neutralising the rogue drone.

## Patentansprüche

1. System zum Abfangen einer nicht autorisierten Drohne (30), das System umfassend:
einen Emitter (10) für breitwinklige elektromagnetische Strahlung zum Beleuchten eines Kegels von Himmel mit codierter elektromagnetischer Strahlung (12); und
ein Luftfahrzeug (20), umfassend:
einen Detektor (24) für elektromagnetische Strahlung zum Empfangen von codierter elektromagnetischer Strahlung (14), die von einer nicht autorisierten Drohne reflektiert wird, die in dem Kegel von Himmel operiert; und
eine Steuereinrichtung (22) zum Bestimmen der Position der nicht autorisierten Drohne basierend auf der empfangenen codierten elektromagnetischen Strahlung,
**gekennzeichnet durch:**
den Detektor umfassend einen Notchfilter zum Auswählen der codierten elektromagnetischen Strahlung und zum Nichtberücksichtigen von Licht aus anderen Quellen.

2. System nach Anspruch 1, wobei der Emitter einen Emitter für einen codierten Laserstrahl umfasst.

3. System nach Anspruch 2, wobei der Emitter einen Emitter für einen Laserstrahl mit einem monochromatischen Code umfasst.

4. System nach Anspruch 2 oder 3, wobei der Laserstrahl eine Wellenlänge von zwischen 700 nm und 1 mm aufweist.

5. System nach einem der vorstehenden Ansprüche, umfassend eine drehbare Halterung, die mit dem Emitter gekoppelt ist, wobei die Halterung angeordnet ist, um dem Emitter eine einstellbare Drehung und Höhe bereitzustellen.

6. System nach Anspruch 5, wobei die Halterung einen Motor und eine Steuereinrichtung umfasst, wobei die Steuereinrichtung konfiguriert ist, um Steuersignale zu erzeugen, um den Motor zu steuern, um die Höhe und/oder die Zeigerichtung des Emitters zu ändern.

7. Luftfahrzeug (20) zum Abfangen einer nicht autorisierten Drohne, umfassend:
einen Detektor (24) zum Empfangen von codierter elektromagnetischer Strahlung (14), die von einer nicht autorisierten Drohne (30) reflektiert wird; und
eine Steuereinrichtung (22), die konfiguriert ist, um den Azimut und die Höhe der nicht autorisierten Drohne unter Verwendung der empfangenen codierten elektromagnetischen Strahlung zu berechnen,
**gekennzeichnet durch:**
den Detektor umfassend einen Notchfilter zum Auswählen der codierten elektromagnetischen Strahlung und zum Nichtberücksichtigen von Licht aus anderen Quellen.

8. Luftfahrzeug nach Anspruch 7, wobei der Detektor eine Vielzahl von Kameras umfasst.

9. Luftfahrzeug nach Anspruch 7 oder 8, wobei die Steuereinrichtung konfiguriert ist, um Steuersignale zu erzeugen, um zu bewirken, dass sich das Luftfahrzeug zu der nicht autorisierten Drohne bewegt.

10. Luftfahrzeug nach einem der Ansprüche 7 bis 9, umfassend eine Drohnenneutralisationsvorrichtung (24).

11. Luftfahrzeug nach Anspruch 10, wobei die Drohnenneutralisationsvorrichtung eine Vielzahl von ausgefahrenen Leinen umfasst, die an einem Ende mit dem Boden des Luftfahrzeugs gekoppelt sind.

12. Verfahren zum Abfangen einer nicht autorisierten Drohne (30), umfassend:
Beleuchten eines Kegels von Himmel mit codierter elektromagnetischer Strahlung (12);
Empfangen von codierter elektromagnetischer Strahlung (14), die von einer nicht autorisierten Drohne (30) reflektiert wird, die in dem Kegel von Himmel operiert; und
Bestimmen der Position der nicht autorisierten Drohne unter Verwendung der empfangenen codierten elektromagnetischen Strahlung,
**gekennzeichnet durch:**
Filtern der empfangenen codierten elektromagnetischen Strahlung unter Verwendung eines Notchfilters, derart, dass eine vorbestimmte Frequenz von elektromagnetischer Strahlung empfangen und verarbeitet wird.

13. Verfahren zum Abfangen einer nicht autorisierten Drohne nach Anspruch 12, umfassend das Erzeugen von Steuersignalen, um ein Luftfahrzeug zu der nicht autorisierten Drohne zu bewegen.

14. Verfahren nach Anspruch 12 oder 13, umfassend ein Neutralisieren der nicht autorisierten Drohne.

## Revendications

1. Système destiné à intercepter un drone indésirable (30), le système comprenant :
un émetteur de rayonnement électromagnétique à grand angle (10) pour illuminer un cône de ciel avec un rayonnement électromagnétique codé (12) ; et
un véhicule aérien (20), comprenant :
un détecteur de rayonnement électromagnétique (24) pour recevoir un rayonnement électromagnétique codé (14) reflété depuis un drone indésirable fonctionnant dans le cône de ciel ; et
un dispositif de commande (22) pour déterminer la position du drone indésirable en fonction du rayonnement électromagnétique codé reçu,
**caractérisé par** :
le détecteur comprenant un filtre coupe-bande pour sélectionner le rayonnement électromagnétique codé et pour ignorer la lumière provenant d'autres sources.

2. Système selon la revendication 1, dans lequel l'émetteur comprend un émetteur de faisceau laser codé.

3. Système selon la revendication 2, dans lequel l'émetteur comprend un émetteur de faisceau laser à code monochromatique.

4. Système selon la revendication 2 ou la revendication 3, dans lequel le faisceau laser a une longueur d'onde d'entre 700 nm et 1 mm.

5. Système selon l'une quelconque des revendications précédentes, comprenant une monture rotative couplée à l'émetteur, dans lequel la monture est agencée pour fournir à l'émetteur une rotation et une élévation ajustables.

6. Système selon la revendication 5, dans lequel la monture comprend un moteur et un dispositif de commande, le dispositif de commande étant configuré pour générer des signaux de commande pour commander le moteur pour changer l'élévation et/ou la direction de pointage de l'émetteur.

7. Véhicule aérien (20) destiné à intercepter un drone indésirable, comprenant :
un détecteur (24) pour recevoir un rayonnement électromagnétique codé (14) reflété depuis un drone indésirable (30) ; et
un dispositif de commande (22) configuré pour calculer l'azimut et l'élévation du drone indésirable au moyen du rayonnement électromagnétique codé reçu,
**caractérisé par** :
le détecteur comprenant un filtre coupe-bande pour sélectionner le rayonnement électromagnétique codé et pour ignorer la lumière provenant d'autres sources.

8. Véhicule aérien selon la revendication 7, dans lequel le détecteur comprend une pluralité de caméras.

9. Véhicule aérien selon la revendication 7 ou la revendication 8, dans lequel le dispositif de commande est configuré pour générer des signaux de commande pour amener le véhicule aérien à se déplacer vers le drone indésirable.

10. Véhicule aérien selon l'une quelconque des revendications 7 à 9, comprenant un dispositif de neutralisation de drone (24).

11. Véhicule aérien selon la revendication 10, dans lequel le dispositif de neutralisation de drone comprend une pluralité de cordes déployées couplées au niveau d'une extrémité au bas du véhicule aérien.

12. Procédé d'interception d'un drone indésirable (30), comprenant :
l'illumination d'un cône de ciel avec un rayonnement électromagnétique codé (12) ;
la réception d'un rayonnement électromagnétique codé (14) reflété depuis un drone indésirable (30) fonctionnant dans le cône de ciel ; et
la détermination de la position du drone indésirable au moyen du rayonnement électromagnétique codé de réception,
**caractérisé par** :
le filtrage du rayonnement électromagnétique codé reçu au moyen d'un filtre coupe-bande, de telle sorte qu'une fréquence prédéterminée de rayonnement électromagnétique est reçue et traitée.

13. Procédé d'interception d'un drone indésirable selon la revendication 12, comprenant la génération de signaux de commande pour déplacer un véhicule aérien vers le drone indésirable.

14. Procédé selon la revendication 12 ou la revendication 13, comprenant la neutralisation du drone indésirable.
